# EUROPÄISCHE PATENTSCHRIFT

(11) **EP 3 256 342 B1**
(45) Veröffentlichungstag und Bekanntmachung des Hinweises auf die Patenterteilung: **12.08.2020**
(21) Anmeldenummer: 16708384.9
(22) Anmeldetag: 02.03.2016
(51) Int. Cl.: B60M 1/18, B60M 1/36

(54) **FAHRLEITUNGSEINRICHTUNG**
CONTACT LINE SYSTEM
DISPOSITIF DE LIGNE DE CONTACT

(30) Priorität: 19.03.2015 DE 102015205009
(43) Veröffentlichungstag der Anmeldung: 20.12.2017
(73) Patentinhaber: Siemens Mobility GmbH, 81739 München (DE)
(72) Erfinder: NOACK, Maik, 15913 Spreewaldheide / OT Laasow (DE)
(86) Internationale Anmeldenummer: PCT/EP2016/054390
(87) Internationale Veröffentlichungsnummer: WO 2016/146385

(56) Entgegenhaltungen:
- EP-A1- 0 968 873
- EP-A1- 2 535 219
- DE-A1-102004 032 019
- DE-A1-102010 029 450
- DE-B3- 10 233 842

## Beschreibung

Die Erfindung betrifft eine Fahrzeuganordnung mit einer Fahrleitungseinrichtung zur Energieversorgung von wenigstens einem sich relativ zur Fahrleitungseinrichtung in einer Fahrtrichtung bewegenden Fahrzeug.

Bekannte Fahrzeuganordnungen sind aus der DE 102 33 842 B3, der DE 10 2004 032 019 A1, der EP 2 535 219 A1 und der EP 0 968 873 A1 bekannt. So sind in der DE 102 33 842 B3 und in der DE 10 2004 032 019 A1 jeweils ein Energieversorgungssystem auf Stromschienen/Stromabnehmer-Basis, in der EP 2 535 219 A1 eine Energieaufladevorrichtung für ein Fahrzeug und in der EP 0 968 873 A1 ein öffentliches Verkehrsnetz mit elektrischen Fahrzeugen beschrieben.

Fahrleitungseinrichtungen werden beispielsweise zur Energieversorgung verschiedenster Arten von Schienenfahrzeugen oder anderen Fahrzeugen verwendet und sind beispielsweise als Oberleitungen oder als Stromschienen ausgebildet, wobei die Stromschienen als Deckenstromschienen oder auch als seitliche dritte Schiene im Bodenbereich der Fahrstrecke ausgebildet sein können. Diese Art von Stromversorgungssystemen auf Basis von seitlich geführten Stromschienen sind beispielsweise aus Metrosystemen bekannt und werden üblicherweise für Speisespannungen bis ca. 1000 Volt Gleichstrom eingesetzt. Es sind aber auch Anwendungen aus dem Fernverkehr, beispielsweise bei der Eisenbahn in Großbritannien, bekannt. Stromschienensysteme, insbesondere die seitlich geführten Stromschienensysteme, weisen die Problematik auf, dass an Weichenstraßen, Kreuzungen, Abstellgleisen usw. die Stromschienen regelmäßig unterbrochen werden müssen, um eine Durchfahrt auf Abzweigen der Gleise zu ermöglichen. Weiterhin sorgen auch bauliche Gegebenheiten wie beispielsweise Brückenpfeiler, niveaugleiche Kreuzungen, Kurven, Unterführungen, etc. für Unterbrechungen der Stromschienen. Diese Stromschienenlücken sind beispielsweise bis zu 300 Meter lang. Verliert ein zu speisendes Fahrzeug in der Stromschienenlücke den Kontakt zur Fahrleitungseinrichtung kann aufgrund der bekannten Ausgleichsvorgänge in Gleichstromnetzen ein Abrissfunken zwischen Stromschiene und Stromabnehmer entstehen. Dieser Abrissfunken kann zusätzlichen Verschleiß am Stromabnehmer und an der Stromschiene verursachen und auch zu Überschlägen zu leitfähigen Teilen des Fahrzeugs führen. Solche Überschläge können schwere Zerstörungen und Brände verursachen und sind ein Sicherheitsrisiko, das zu vermeiden ist.

Daher werden die bekannten Fahrleitungseinrichtungen so angepasst, dass die Fahrzeuge möglichst immer mit wenigstens einem Stromabnehmer in Kontakt mit der Fahrleitungseinrichtung, also der Stromschiene, bleiben. Hierfür wird die Länge zwischen den Stromabnehmern des Fahrzeugs größer ausgebildet als die längste Stromschienenlücke im System. Dies kann beispielsweise erreicht werden durch zusätzliche Stromschienenabschnitte zwischen Gleiswechseln, um die Längen der Stromschienenlücken zu verringern, durch Einzelverbindungen zwischen den Waggons insgesamt vergrößerte Fahrzeuglängen, oder durch bauliche Veränderungen, die Stromschienenlücken reduzieren. Diese Anpassungen sind mit größeren Aufwänden im Fahrzeugbau, Streckenbau oder aufwendigen Stromschienenkonstruktionen verbunden. Bei Anlagenerweiterungen müssen die einmal festgelegten Maßnahmen strikt beachtet werden, was die Flexibilität hinsichtlich der Auswahl technischer Lösungen oder der Auswahl von Anbietern einschränkt.

Somit liegt der Erfindung die Aufgabe zugrunde, eine Fahrzeuganordnung mit einer Fahrleitungseinrichtung bereitzustellen, die mit geringem konstruktivem Aufwand die Problematik von Lücken in der Fahrleitungseinrichtung aufhebt oder zumindest verringert.

Erfindungsgemäß wird diese Aufgabe gelöst durch die Fahrzeuganordnung nach Anspruch 1.

Die erfindungsgemäße Lösung ermöglicht es auf sehr einfache Weise, das aus der DE 10 2010 029 450 A1 bekannte Verfahren zur Vermeidung von Abrissfunken für Fahrzeuge mit Energiespeichern anzuwenden. So ist es möglich, dass der Funkenabriss generell vermieden wird und die Durchfahrt durch eine Stromschienenlücke ohne spürbare Unterbrechungen im Betrieb ermöglicht wird. Dabei ist insbesondere weiterhin eine konstante Zugkraft, mindestens konstante Geschwindigkeit und voller Betrieb aller internen Aggregate, insbesondere Klimaanlagen, möglich. Oben genannte Aufwendungen im Fahrzeug oder beim Bau oder der Konstruktion der Stromschiene sind nicht nötig. Vielmehr ist es möglich, die Fahrleitungseinrichtung an einem konstruktiv günstigen Punkt zu unterbrechen, um den baulichen und betrieblichen Gegebenheiten Rechnung zu tragen. Wie in der DE 10 2010 029 450 A1 oder auch in der DE 10 2014 217 219 beschrieben, muss beim Abkontaktieren eines Stromabnehmers von der Fahrleitungseinrichtung der Strom im Moment des Verlustes des galvanischen Kontakts Null sein, damit ein Abrissfunke verhindert wird.

Durch die erfindungsgemäße Lösung ist es möglich, dass ein Fahrzeug auf dem Weg zu einer Lücke in der Fahrleitungseinrichtung im Bereich des zweiten Fahrleitungsabschnitts die Spannung im Fahrzeug über den Energiespeicher anzuheben, so dass kein Strom zwischen Fahrzeug und Fahrleitungseinrichtung fließt, und so ein Abrissfunken vermieden wird.

Um sicherzustellen, dass die Energieversorgung des zweiten Fahrleitungsabschnitts ausschließlich über das elektrische Bauelement erfolgt, ist der erste Fahrleitungsabschnitt erfindungsgemäß mit einem ersten Abstand zum zweiten Fahrleitungsabschnitt angeordnet. Der Abstand kann dabei so groß ausgebildet sein, dass ein Stromfluss an dem elektrischen Bauelement vorbei vermieden wird. Auf der anderen Seite kann der Abstand so klein gewählt sein, dass er kleiner als die in der Fahrtrichtung gesehene Länge der üblichen Stromabnehmer ist. Dadurch behält der Stromabnehmer beim Überfahren des ersten Abstands immer Kontakt. Der erste Abstand ist beispielsweise 5 mm groß.

Ferner ist der zweite Fahrleitungsabschnitt erfindungsgemäß mit einem zweiten Abstand zu dem in Fahrtrichtung folgenden Fahrleitungsabschnitt angeordnet, wobei der zweite Abstand größer ist als der erste Abstand. Der zweite Abstand wäre hier beispielsweise die Lücke in der Stromschiene, die beispielsweise einige hundert Meter lang sein kann.

Die erfindungsgemäße Lösung kann durch vorteilhafte Ausgestaltungen weiterentwickelt werden. Diese Weiterentwicklung ist im Folgenden beschrieben.

So können der erste Fahrleitungsabschnitt und der zweite Fahrleitungsabschnitt über das elektrische Bauelement miteinander verbunden sein. Dies hat den Vorteil, dass die Energiezufuhr zum zweiten Fahrleitungsabschnitt besonders einfach zu realisieren ist, weil keine separate Leitung zum zweiten Fahrleitungsabschnitt von der Energiequelle gelegt werden muss.

Um eine besonders kostengünstige Fahrleitungseinrichtung bereitzustellen, kann das elektrische Bauelement in Form einer Diode ausgebildet sein. Dioden sind kostengünstig verfügbare Bauelemente, die konstruktiv einfach in die Fahrleitungseinrichtung integriert werden können.

Die erfindungsgemäße Fahrzeuganordnung ist zum Bewegen wenigstens eines Fahrzeugs in einer Fahrtrichtung entlang einer Fahrstrecke ausgebildet und umfasst wenigstens eine Fahrleitungseinrichtung und wenigstens ein Fahrzeug, das wenigstens einen Energiespeicher aufweist und mindestens zeitweise ohne Verbindung zur Fahrleitungseinrichtung entlang der Fahrstrecke antreibbar ist.

Im Folgenden wird die Erfindung mit Bezug auf die in den beigefügten Zeichnungen dargestellten Ausführungsbeispiele erläutert. Besondere Merkmale einzelner Ausführungsbeispiele können auch mit anderen Ausführungsbeispielen kombiniert werden.

Es zeigen:
- Fig. 1: eine schematische Darstellung einer ersten Ausführungsform einer erfindungsgemäßen Fahrleitungseinrichtung;
- Fig. 2: eine schematische Darstellung eines erfindungsgemäßen Fahrzeugs zur Verwendung mit der Fahrleitungseinrichtung aus Fig. 1;
- Fig. 3 bis Fig. 5: schematische Darstellungen von verschiedenen Ausführungsformen von erfindungsgemäßen Fahrzeugen;
- Fig. 6 bis Fig. 7: eine schematische Darstellung einer beispielhaften Ausführungsform einer erfindungsgemäßen Fahrzeuganordnung in unterschiedlichen Positionen.

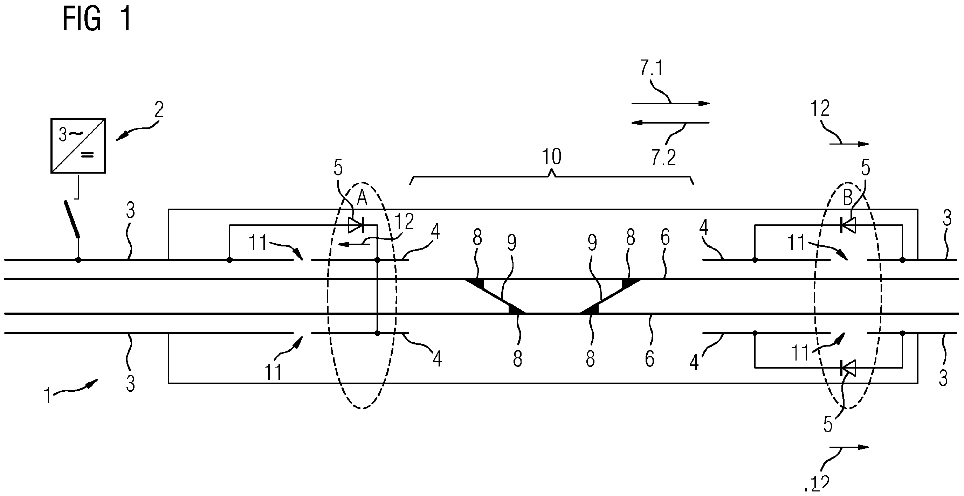

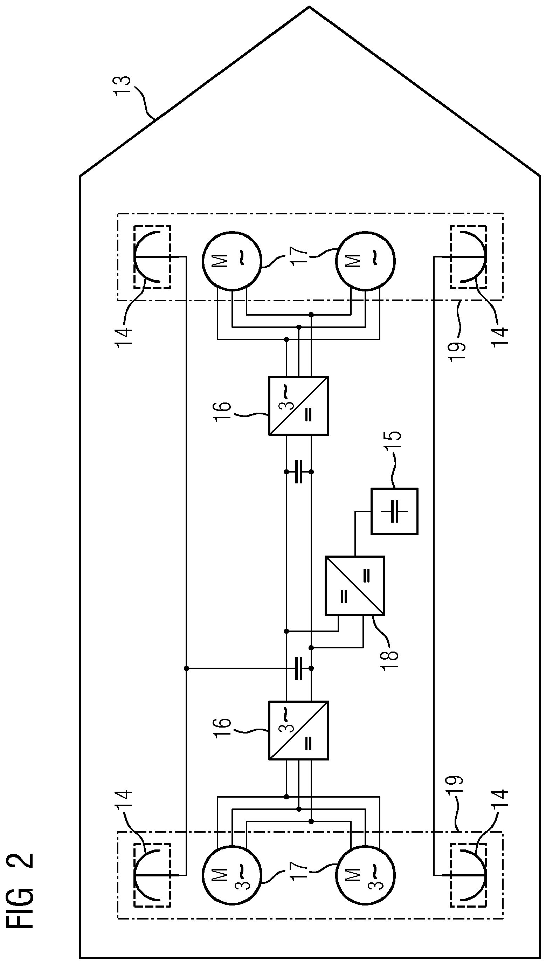

Zunächst wird die Erfindung mit Bezug auf die beispielhafte Ausführungsform der Figuren 1 und 2 beschrieben. Fig. 1 zeigt eine beispielhafte Ausführungsform einer erfindungsgemäßen Fahrleitungseinrichtung 1, die eine Energiequelle 2, erste Fahrleitungsabschnitte 3, zweite Fahrleitungsabschnitte 4 und elektrische Bauelemente 5 aufweist. Die ersten und zweiten Fahrleitungsabschnitte 3, 4 sind beispielsweise als eine Stromschiene ausgebildet und beispielsweise seitlich von einer Fahrstrecke 6 angeordnet. Die zwei Fahrstrecken 6 sind beispielsweise jeweils als Schienenpaar ausgebildet. In Fig. 1 sind zwei parallel zueinander angeordnete Fahrstrecken ausgebildet, auf denen Fahrzeuge jeweils in beiden entgegengesetzten Fahrtrichtungen 7 fahren können. Zum Wechseln der Fahrstrecke sind die beiden Fahrstrecken 6 mit Weichen 8 und Verbindungsstrecken 9 ausgebildet. Die ersten und zweiten Fahrleitungsabschnitte 3, 4 sind in der Fahrtrichtung 7 gesehen jeweils seitlich von jeder Fahrstrecke 6 angeordnet, und zwar jeweils auf der der anderen Fahrstrecke 6 abgewandten Seite.

Die Energiequelle 2 ist als Gleichstromquelle ausgebildet, die beispielsweise eine Gleichspannung bis ca. 1000 Volt bereitstellt. Die Energiequelle 2 ist schaltbar mit dem ersten Fahrleitungsabschnitt 3 verbunden. Über Brückenverbindungen sind sämtliche erste Fahrleitungsabschnitte 3 der Fahrleitungseinrichtung 1 mit einer Energiequelle 2 verbunden, auch wenn diese in der schematischen Darstellung nicht im Einzelnen dargestellt sind.

Im Bereich der Weichen 8 und Verbindungsstrecken 9 weist die Fahrleitungseinrichtung 1 eine Lücke 10 auf, in der keine ersten oder zweiten Fahrleitungsabschnitte 3, 4 angeordnet sind. Die ersten und zweiten Fahrleitungsabschnitte 3, 4 sind jeweils parallel zur Fahrstrecke 6 angeordnet. Da die Fahrstrecken in Fig. 1 gerade ausgebildet sind, sind auch die ersten und zweiten Fahrleitungsabschnitte 3, 4 gerade ausgebildet. Für Kurvenfahrten sind selbstverständlich auch gekrümmte Fahrleitungsabschnitte 3, 4 möglich. Die Länge der ersten und zweiten Fahrleitungsabschnitte 3, 4 in der Fahrtrichtung 7 ist sehr unterschiedlich. Die Länge der ersten Fahrleitungsabschnitte 3 ist größer als die Länge der zweiten Fahrleitungsabschnitte 4. Erfindungsgemäß sind die Fahrleitungsabschnitte 3, 4 so angeordnet, dass in jeder Fahrtrichtung 7.1, 7.2 ein zweiter Fahrleitungsabschnitt 4 jeweils unmittelbar vor der Lücke 10 und hinter den ersten Fahrleitungsabschnitten 3 angeordnet ist. Der zweite Fahrleitungsabschnitt 4 ist also zwischen dem ersten Fahrleitungsabschnitt 3 und der Lücke 10 angeordnet. Ein Fahrzeug, das in einer Fahrtrichtung 7.1., 7.2 entlang einer der beiden Fahrstrecken 6 fährt, passiert also zunächst den ersten Fahrleitungsabschnitt 3, anschließend den kürzeren zweiten Fahrleitungsabschnitt 4 und anschließend die Lücke 10. Die jeweils hintereinander angeordneten ersten Fahrleitungsabschnitte 3 und zweiten Fahrleitungsabschnitte 4 sind jeweils mit einem ersten Abstand 11 zueinander angeordnet. Die Länge des ersten Abstands 11 ist wesentlich kleiner als die Länge der Lücke 10, die einen zweiten Abstand darstellt. Der erste Abstand 11 beträgt beispielsweise 5 mm. Die durch den ersten Abstand 11 jeweils voneinander entfernten ersten Fahrleitungsabschnitte 3 und zweiten Fahrleitungsabschnitte 4 sind elektrisch über das elektrische Bauelement 5 miteinander verbunden. Eine andere Isolierung, die die ausschließliche Verbindung über das Bauteil 5 gewährleistet ist möglich.

Das elektrische Bauelement 5 begrenzt oder sperrt den über ihn laufenden Stromfluss in einer Sperrrichtung 12, die in Stromlaufrichtung vom zweiten Fahrleitungsabschnitt 4 zur Energiequelle 2 verläuft. Wie im Detail B dargestellt, kann jeweils ein elektrisches Bauelement 5 zwischen einem ersten Fahrleitungsabschnitt 3 und einem zweiten Fahrleitungsabschnitt 4 angeordnet sein. Alternativ kann aber auch, wie im Detail A dargestellt, nur ein elektrisches Bauelement 5 zwischen einem ersten Fahrleitungsabschnitt 3 und zwei zweiten Fahrleitungsabschnitten 4, die elektrisch miteinander verbunden sind, angeordnet sein. In jedem Fall ist der Stromfluss von jedem zweiten Fahrleitungsabschnitt 4 in Richtung der Energiequelle 2 durch wenigstens ein elektrisches Bauelement 5 gesperrt oder zumindest begrenzt. Entgegen der Sperrrich tung 12 lässt das elektrische Bauelement 5 den Stromfluss zu. Bei den in den Figuren dargestellten Ausführungsformen der erfindungsgemäßen Fahrleitungseinrichtung 1 ist das elektrische Bauelement 5 jeweils als eine Diode ausgebildet.

In Fig. 2 ist eine beispielhafte Ausführungsform eines erfindungsgemäßen Fahrzeugs 13 dargestellt, das durch die in Fig. 1 dargestellte Fahrleitungseinrichtung 1 mit elektrischer Energie versorgbar ist und zum Fahren auf einer der Fahrstrecken 6 ausgebildet ist. Das Fahrzeug weist vier elektrisch miteinander verbundene Stromabnehmer 14, einen Energiespeicher 15, einen Wechselrichter 16, mehrere Antriebsmotoren 17 und einen Laderichter 18 auf. Das Fahrzeug 13 ist beispielsweise eine Metrobahn, eine U-Bahn, eine Straßenbahn oder ähnliches. Die Stromabnehmer 14 sind bei der Ausführungsform in Figur 2 jeweils beidseitig an jedem Drehgestell 19 des Fahrzeugs 13 angeordnet. Die Stromabnehmer 14 sind dabei so ausgebildet, dass sie beim Fahren des Fahrzeugs auf der Fahrstrecke 6 mit einem ersten und/oder zweiten Fahrleitungsabschnitt 3, 4 im Kontakt stehen, wenn diese neben ihnen angeordnet sind. Bei Kontakt wenigstens eines Stromabnehmers 14 mit einem ersten oder zweiten Fahrleitungsabschnitt 3, 4 werden die Antriebsmotoren 17 von der Energiequelle 2 der Fahrleitungseinrichtung 1 gespeist. Beim Bremsen des Fahrzeugs 13 wirken die Antriebsmotoren 17 als Generatoren, so dass Energie über die Fahrleitungseinrichtung 1 zur Energiequelle 2 zurückgespeist werden. Hat keiner der Stromabnehmer 14 Kontakt zur Fahrleitungseinrichtung 1, können die Antriebsmotoren 17 mit Energie aus dem fahrzeuginternen Energiespeicher 15 betrieben werden.

Um das Entstehen eines Abrissfunkens beim Übergang vom zweiten Fahrleitungsabschnitt 4 zur Lücke 10 zu vermeiden, ist das Fahrzeug 13 zur Ausführung des vorteilhaften Verfahrens ausgebildet, das in der DE 10 2010 029 450 A1 oder der DE 10 2014 217 219 beschrieben ist. Der Kürze halber wird hier nicht im Detail auf dieses Verfahren eingegangen, sondern auf die DE 10 2010 029 450 A1 und die DE 10 2014 217 219 verwiesen, deren Inhalt hier vollständig mit umfasst ist. Gemäß dem Verfahren wird die fahrzeuginterne Spannung von dem Energiespeicher 15 erhöht, bevor der letzte Stromabnehmer 14 den elektrischen Kontakt mit der Fahrleitungseinrichtung 1 verliert. Dies geschieht bei der erfindungsgemäßen Fahrleitungseinrichtung 1 im Bereich des zweiten Fahrleitungsabschnitts 4, also wenn der letzte kontaktierende Stromabnehmer 14 im Kontakt mit dem zweiten Fahrleitungsabschnitt 4 ist. Durch die Sperrwirkung des elektrischen Bauelements 5 wird ein Stromfluss vom Fahrzeug 13 zur Energiequelle 2 in diesem Bereich des Fahrleitungsabschnittes 4 verhindert, so dass kein Stromfluss zwischen dem Fahrzeug 13 und der Fahrleitungseinrichtung 1 stattfindet. Ohne Stromfluss kann auch kein Abrissfunken entstehen, so dass das Fahrzeug 13 sicher in die Lücke 10 fahren kann.

In der Lücke 10, in der das Fahrzeug 13 keinen elektrischen Kontakt zur Fahrleitungseinrichtung 1 hat, wird das Fahrzeug vom Energiespeicher 15 mit Energie versorgt. So kann der Betrieb ohne Unterbrechung der Zugkraft bzw. Bremskraft weiter aufrechterhalten werden oder die Lücke 10 mindestens in Beharrungsfahrt passiert werden, d. h. die Geschwindigkeit, die vor Einfahrt in die Lücke 10 erreicht wurde, wird bis zum Verlassen der Lücke 10 aufrechterhalten. Die in Fig. 2 nicht dargestellten Bordnetze des Fahrzeugs 13 können beim Durchfahren der Lücke 10 erfindungsgemäß weiterlaufen, was insbesondere bei Klimaanlagen, Notsystemen, etc. wünschenswert ist. Anders als in der DE 10 2010 029 450 A1 oder der DE 10 2014 217 219, sollte hier der Energiespeicher 15 während des gesamten Betriebs prinzipiell geladen bleiben und vorrangig dazu verwendet werden, die Energie für das Durchfahren der Lücke 10 bereitzustellen. Dies ist besonders vorteilhaft, weil ein Energiespeicher 15, der hierauf optimiert ist, kann kleiner ausfallen als bei Anwendungen, die ein dauerhaftes Fahren ohne Fahrleitungseinrichtung 1 ermöglichen soll. So wird wenig Einbauraum im Fahrzeug 13 von dem Energiespeicher 15 benötigt. Eine zu starke Entladung des Energiespeichers 15 während der Fahrt durch die Lücke 10 ist dennoch nicht zu erwarten, weil der Energiespeicher 15 im Bereich der Fahrleitungseinrichtung 1 aufgeladen werden kann und die Länge der Lücke 10 vorbekannt und relativ klein ist. Der verwendete Energiespeicher 15 ist hinsichtlich Speicherkapazität so bemessen, dass entweder der Betrieb ohne Unterbrechung der Zug- bzw. Bremskraft weiter aufrechterhalten werden kann oder die Lücke 10 mindestens in Beharrfahrt passiert wird.

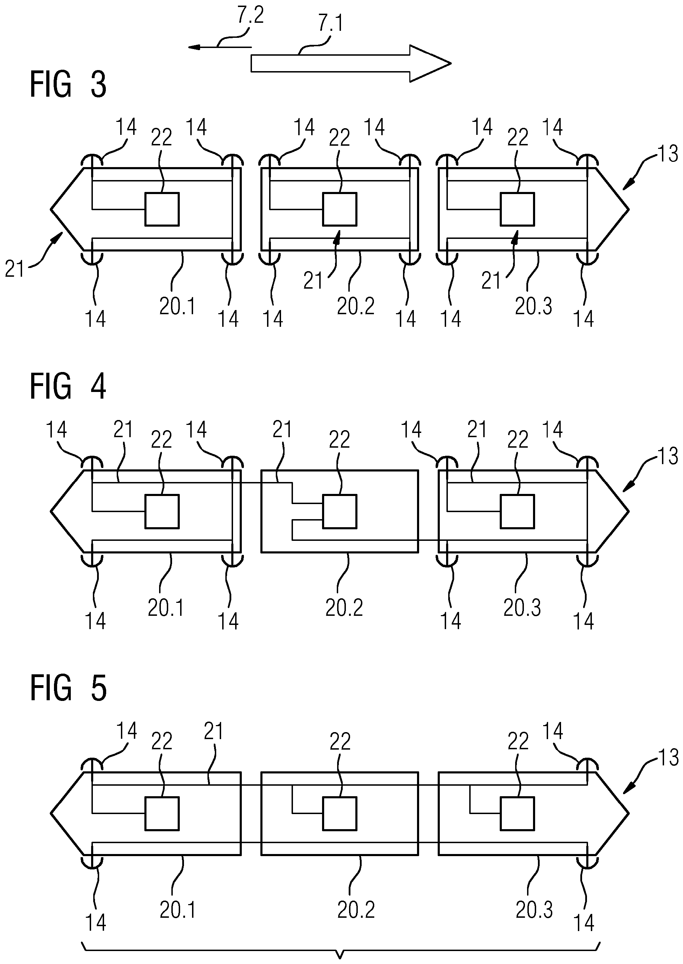

In den Fig. 3 bis 5 sind unterschiedliche Ausführungsformen eines erfindungsgemäßen Fahrzeugs 13 dargestellt. Der Einfachheit halber wird lediglich auf die Unterschiede zu dem Fahrzeug in Fig. 2 eingegangen.

Das Fahrzeug 13 in Fig. 3 besteht aus mehreren miteinander gekoppelten Einzelwagen 20.1, 20.2, 20.3. Bei der Ausführungsform in Fig. 3 hat jeder dieser Einzelwagen 20 eigene Stromabnehmer 14, die jeweils ein eigenes fahrzeuginternes Netz 21 speisen. Die Stromabnehmer 14 sind bei der Ausführungsform in Fig. 3 untereinander verbunden und speisen über entsprechende Schutz- und Schalteinrichtungen (nicht dargestellt) die Antriebsmotoren 17 und Bordnetzbetriebe 22.

In der alternativen Ausführungsform der Fig. 4 sind lediglich die Antriebsmotoren 17 aufweisenden Einzelwagen 20.1, 20.3 mit Stromabnehmern 14 an jedem Drehgestell 19 ausgebildet. Zur Versorgung des nicht angetriebenen Einzelwagens 20.2 ist dieser in das gemeinsame interne Netz 21 eingebunden, so dass auch die Bordnetzbetriebe 22 dieses Einzelwagens 20.2 betrieben werden können.

Bei der alternativen Ausführungsform in Fig. 5 sind lediglich Stromabnehmer 14 an dem Drehgestell 19 am Ende und am Anfang des Fahrzeugs 13 angeordnet.

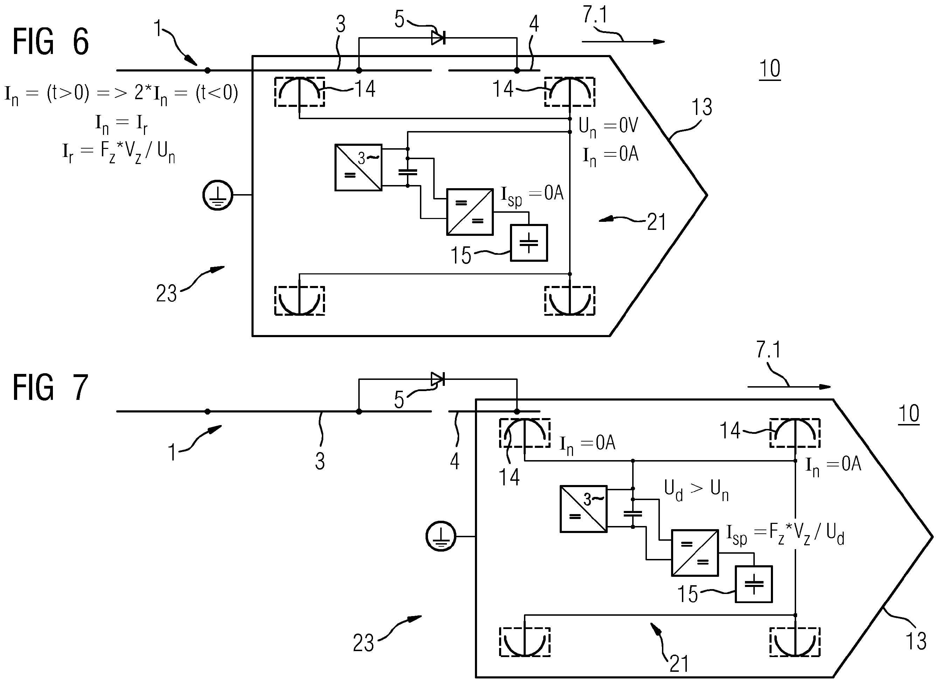

Fig. 6 und Fig. 7 zeigen eine erfindungsgemäße Fahrzeuganordnung 23, die eine erfindungsgemäße Fahrleitungseinrichtung 1 und wenigstens ein erfindungsgemäßes Fahrzeug 13 aufweist.

Die Fahrleitungseinrichtung 1 der Fahrzeuganordnung 23 ist in den Figuren 6 und 7 lediglich ausschnittsweise dargestellt. Sie entspricht aber der in Fig. 1 dargestellten Fahrleitungseinrichtung 1. Auch das in den Fig. 6 und 7 dargestellte Fahrzeug 13 der Fahrzeuganordnung 23 ist lediglich vereinfacht dargestellt. Es entspricht aber einer der zuvor beschriebenen Ausführungsformen des Fahrzeugs 13.

In den Figuren 6 und 7 ist die Fahrt eines Fahrzeugs 13 in der Fahrtrichtung 7.1 in unterschiedlichen Positionen dargestellt.

In Fig. 6 hat der vordere Stromabnehmer 14 bereits den Kontakt zur Fahrleitungseinrichtung 1 und insbesondere zum zweiten Fahrleitungsabschnitt 4 verloren. Der hintere Stromabnehmer 14 hat noch Kontakt zur Fahrleitungseinrichtung 1 und zwar zum ersten Fahrleitungsabschnitt 3. Somit erfolgt die Energieversorgung des Fahrzeugs 13 in der Position in Fig. 6 noch über die Energiequelle 2 der Fahrleitungseinrichtung 1.

In der in Fig. 7 dargestellten Position des Fahrzeugs 13 hat sich das Fahrzeug 13 gegenüber Fig. 6 weiter in die Fahrtrichtung 7.1 bewegt und der hintere Stromabnehmer 14 befindet sich nun im Kontakt mit dem zweiten Fahrleitungsabschnitt 4. In dieser Position wird das in der DE 10 2010 029 450 A1 oder der DE 10 2014 217 219 beschriebene Verfahren angewendet, bei dem die Spannung im internen Netz 21 des Fahrzeugs 13 durch den Energiespeicher 15 über die Spannung Uₙ der Fahrleitungseinrichtung 1 angehoben wird. Dadurch wird der Stromfluss Iₙ zur Fahrleitungseinrichtung 1 gleich Null, so dass ein sicheres Abkontaktieren des Fahrzeugs 13 von der Fahrleitungseinrichtung 1 erfolgen kann.

Das erfindungsgemäße Fahrzeug 13 ist so ausgebildet, dass nicht dargestellte Erfassungs-, Schalt-, Steuer- und Umformeinrichtungen, die an dem beschriebenen Prozess beteiligt sind, eine ausreichende Dynamik aufweisen, um in der zur Verfügung stehenden Zeit, bis zur maximalen Geschwindigkeit, die für die Passage der Lücke 10 vorgesehen ist, in Relation zur Länge des zweiten Fahrleitungsabschnitts 4, den Prozess sicher ausführen zu können. Die Geschwindigkeit bei Metros ist beispielsweise 80 bis 100 km/h.

Zur Anwendung des beschriebenen Verfahrens ist die Erfassung der Präsenz der Fahrleitungsabschnitte 3, 4 bzw. der Lücke 10 nötig. Diese kann auf unterschiedliche Weisen erfolgen. Beispielsweise kann dies durch gesonderte Signaleinrichtungen, durch Generierung eines Triggersignals auf Basis von im Fahrzeug befindlichen Ortsinformationen oder durch Erfassung der Spannung an einem potenzialfreigeschalteten Stromabnehmer 14 erfolgen, wie es in der DE 10 2014 217 219 beschrieben ist. Alternativ kann es auch durch Erfassung der einzelnen Ströme an allen miteinander verbundenen Stromabnehmern 14 erfolgen. Sobald nur noch ein Stromabnehmer 14 vom Strom durchflossen ist, wird das oben beschriebene Verfahren gestartet. Weitere Möglichkeit ist die Erfassung der Ströme an mindestens den beiden am weitesten hinten laufenden Stromabnehmern in Verbindung mit einer Leistungsbilanz oder Messung der Rückströme. Sobald einer der vermessenen Stromabnehmer einen Strom führt, der der aufgenommenen Leistung oder der Summe der Rückströme adäquat ist, wird das Verfahren nach der DE 10 2010 029 450 A1 ausgelöst.

Erfindungsgemäß kann auch eine Fehlererkennung vorgesehen sein, durch die sichergestellt wird, dass der Energiespeicher 15 sich nicht auf einen angeschlossenen ersten Fahrleitungsabschnitt 3 entlädt. Hierzu wird der Netzstrom der Energiequelle 2 bzw. die Spannung im internen Netz 21 des Fahrzeugs 13 überwacht. Wird der Netzstrom nicht in einer bestimmten Zeit zu Null oder lässt sich die Zwischenkreisspannung im internen Netz 21 in einer bestimmten Zeit nicht über die Netzspannung anheben, ist davon auszugehen, dass kein entkoppelter zweiter Fahrleitungsabschnitt 4 vorhanden ist. In diesem Fall schaltet das Fahrzeug 13 wieder auf den Normalbetrieb um, in dem die Antriebsmotoren 16 von der Energiequelle 2 der Fahrleitungseinrichtung 1 gespeist werden. Ein solcher Fall kann beispielsweise auftreten, wenn die Stromschienenlücke kürzer ist als der Abstand zwischen den Stromabnehmern 14 und dadurch der vorauslaufende Stromabnehmer 14 auf irgendeiner Seite bereits wieder Kontakt zur Fahrleitungseinrichtung 1 bekommt, bevor der hintere Stromabnehmer 14 abkontaktiert hat.

In einer weiteren Ausführungsform der Erfindung kann vorgesehen sein, den Energiespeicher 15 zusätzlich zur teilweisen Speicherung der Bremsenergie des Fahrzeugs 13 zu nutzen. Dies ist aber lediglich eine mögliche Zusatzfunktion. Bekannte Fahrzeuge fahren in der Regel mit einer Zugsicherung, d. h. eine Fahrzeugortung ist vorhanden. Wenn in dieser Fahrzeugortung eine Information hinterlegt ist, dass der vorausliegende Streckenabschnitt frei von Lücken 10 ist, kann sich der Energiespeicher 15 bei der Fahrt entladen und beim Abbremsen zur Aufnahme der Leistung am Beginn der Bremsung bis zum Erreichen der maximalen Ladung genutzt werden.

Die Erfindung hat den weiteren Vorteil, dass Leistungsspitzen für das Beschleunigen optional aus den Energiespeichern 15 bereitgestellt und beim Bremsen vom Energiespeicher 15 gepuffert werden kann. Weiterhin lassen sich beispielsweise Rangierfahrten in die Werkstatt komplett aus dem Energiespeicher 15 fahren. Hierdurch können andere aufwendige Systeme entfallen. Weiterhin können die Energiespeicher 15 den Notbetrieb des Fahrzeugs stabilisieren oder verlängern. Wenn die Erfassung der Lücken über separate Spannungs- oder Stromsensoren an den Stromabnehmern 14 erfolgt, kann durch Plausibilitätsprüfung der Messwerte, wie beispielsweise Zeitüberschreitungen für spannungs- oder stromlosen Zustand oder strom- oder spannungsloser Zustand an unerwartetem Ort, ein Defekt des Stromabnehmers 14 erfasst werden.

## Patentansprüche

1. Fahrzeuganordnung (23) zum Bewegen wenigstens eines Fahrzeugs (13) in einer Fahrtrichtung (7.1, 7.2) entlang einer Fahrstrecke (6) mit wenigstens einer Fahrleitungseinrichtung (1) und mit wenigstens einem Fahrzeug (13), wobei die Fahrleitungseinrichtung (1) zur Energieversorgung von dem wenigstens einen sich relativ zur Fahrleitungseinrichtung (1) in einer Fahrtrichtung (7.1, 7.2) bewegenden Fahrzeug (13) ausgebildet ist und wenigstens einen ersten Fahrleitungsabschnitt (3), wenigstens einen zweiten Fahrleitungsabschnitt (4), der in der Fahrtrichtung hinter dem ersten Fahrleitungsabschnitt (3) angeordnet ist, wenigstens eine Energiequelle (2), die mit dem ersten Fahrleitungsabschnitt und dem zweiten Fahrleitungsabschnitt verbunden ist, und wenigstens ein elektrisches Bauelement (5) aufweist, das den Stromfluss in einer Sperrrichtung (12) vom zweiten Fahrleitungsabschnitt (4) zur Energiequelle (2) zumindest begrenzt und entgegen der Sperrrichtung (12) zulässt, wobei der erste Fahrleitungsabschnitt (3) mit einem ersten Abstand (11) zum zweiten Fahrleitungsabschnitt (4) und
der zweite Fahrleitungsabschnitt mit einem zweiten Abstand (10) zu dem in Fahrtrichtung folgenden Fahrleitungsabschnitt angeordnet ist, wobei der zweite Abstand größer als der erste Abstand ist,
**dadurch gekennzeichnet, dass**
das Fahrzeug (13) wenigstens einen Energiespeicher (15) aufweist und,
dass das Fahrzeug (13) ausgebildet ist, im Bereich des zweiten Fahrleitungsabschnitts die Spannung im Fahrzeug (13) über den Energiespeicher (15) anzuheben, so dass kein Strom zwischen Fahrzeug (13) und Fahrleitungseinrichtung (1) fließt und zumindest zeitweise ohne Verbindung zur Fahrleitungseinrichtung (1) entlang der Fahrstrecke (6) antreibbar ausgebildet ist.

2. Fahrzeuganordnung (23) nach Anspruch 1
**dadurch gekennzeichnet, dass**
der erste Fahrleitungsabschnitt (3) und der zweite Fahrleitungsabschnitt (4) über das elektrische Bauelement (5) miteinander verbunden sind.

3. Fahrzeuganordnung (23) nach Anspruch 1 oder 2,
**dadurch gekennzeichnet, dass**
das elektrische Bauelement (5) in Form einer Diode ausgebildet ist.

4. Fahrzeuganordnung (23) nach einem der oben genannten Ansprüche,
**dadurch gekennzeichnet, dass**
der zweite Fahrleitungsabschnitt (4) zwischen dem ersten Fahrleitungsabschnitt (3) und einer Lücke (10) angeordnet ist.

5. Fahrzeuganordnung (23) nach einem der oben genannten Ansprüche,
**dadurch gekennzeichnet, dass**
der erste Abstand (11) so groß ausgebildet ist, dass ein Stromfluss an dem elektrischen Bauelement (5) vorbei vermieden wird, und so klein ausgebildet ist, dass er kleiner als die Länge eines Stromabnehmers (14) des Fahrzeugs (13) ist.

6. Fahrzeuganordnung (23) nach einem der oben genannten Ansprüche,
**dadurch gekennzeichnet, dass**
die Länge des ersten Fahrleitungsabschnitts (3) größer ist als die Länge des zweiten Fahrleitungsabschnitts (4).

7. Fahrzeuganordnung (23) nach einem der oben genannten Ansprüche,
**dadurch gekennzeichnet, dass**
die Fahrleitungsabschnitte (3, 4) als eine Stromschiene ausgebildet sind.

## Claims

1. Vehicle arrangement (23) for moving at least one vehicle (13) in a direction of travel (7.1, 7.2) along a route (6) with at least one contact line system (1) and with at least one vehicle (13), wherein the contact line system (1) is embodied to supply energy from the at least one vehicle (13) moving in a direction of travel (7.1, 7.2) relative to the contact line system (1) and at least one first contact line portion (3), at least one second contact line portion (4), which is arranged in the direction of travel behind the first contact line portion (3), at least one energy source (2), which is connected to the first contact line portion and the second contact line portion, and at least one electrical component (5), which at least restricts the current flow in a reverse direction (12) from the second contact line portion (4) to the energy source (2) and permits the same contrary to the reverse direction (12), wherein the first contact line portion (3) is arranged at a first distance (11) from the second contact line portion (4) and the second contact line portion is arranged at a second distance (10) from the contact line portion which follows in the direction of travel, wherein the second distance is greater than the first distance, **characterised in that** the vehicle (13) has at least one energy storage device (15) and,
that the vehicle (13) is embodied, in the region of the second contact line portion, to raise the voltage in the vehicle (13) by way of the energy storage unit (15), so that no current flows between the vehicle (13) and contact line system (1) and is embodied to be driveable at least temporarily without connection to the contact line device (1) along the route (6).

2. Vehicle arrangement (23) according to claim 1,
**characterised in that**
the first contact line portion (3) and the second contact line portion (4) are connected to one another by way of the electric component (5).

3. Vehicle arrangement (23) according to claim 1 or 2,
**characterised in that**
the electric component (5) is embodied in the form of a diode.

4. Vehicle arrangement (23) according to one of the preceding claims,
**characterised in that**
the second contact line portion (4) is arranged between the first contact line portion (3) and a gap (10).

5. Vehicle arrangement (23) according to one of the aforecited claims,
**characterised in that**
the first distance (11) is embodied to be so large that a current flow past the electric component (5) is avoided and is embodied to be so small that it is smaller than the length of a current collector (14) of the vehicle (13).

6. Vehicle arrangement (23) according to one of the aforecited claims, **characterised in that** the length of the first contact line portion (3) is greater than the length of the second contact line portion (4).

7. Vehicle arrangement (23) according to one of the aforecited claims, **characterised in that** the contact line portions (3, 4) are embodied as a bus bar.

## Revendications

1. Agencement (23) à véhicule pour la mise en mouvement d'au moins un véhicule (13) dans un sens (7.1, 7.2) de marche le long d'une voie (6) de circulation, comprenant au moins un dispositif (1) de ligne de contact et au moins un véhicule (13), le dispositif (1) de ligne de contact étant constitué pour l'alimentation en électricité du au moins un véhicule (13) mis en mouvement dans le sens (7.1, 7.2) de marche par rapport au dispositif (1) de ligne de contact et ayant au moins une première partie (3) de ligne de contact, au moins une deuxième partie (4) de ligne de contact qui, dans le sens de la marche, est disposée derrière la première partie (3) de la ligne de contact, au moins une source (2) d'énergie qui est connectée à la première partie de la ligne de contact et à la deuxième partie de la ligne de contact, et au moins un composant (5) électrique, qui limite au moins le flux de courant dans un sens (12) de blocage de la deuxième partie (4) de la ligne de contact à la source (2) d'énergie et l'autorise dans le sens contraire au sens (12) de blocage, la première partie (3) de la ligne de contact étant disposée à une première distance (11) de la deuxième partie (4) de la ligne de contact et
la deuxième partie de la ligne de contact est disposée à une deuxième distance (10) de la partie de la ligne de contact qui suit dans le sens de la marche, la deuxième distance étant plus grande que la première distance,
**caractérisé en ce que** le véhicule (13) a au moins un accumulateur (15) d'énergie et
**en ce que** le véhicule (13) est constitué pour élever, dans la région de la deuxième partie de la ligne de contact, la tension dans le véhicule (13) par l'accumulateur (15) d'énergie, de manière à ce que du courant ne passe pas entre le véhicule (13) et le dispositif (1) de ligne de contact, et est constitué pour être entraîné le long de la voie (6) de circulation, au moins de temps en temps, sans connexion au dispositif (1) de ligne de contact.

2. Agencement (23) à véhicule suivant la revendication 1,
**caractérisé en ce que**
la première partie (3) de la ligne de contact et la deuxième partie (4) de la ligne de contact sont connectées l'une à l'autre par le composant (5) électrique.

3. Agencement (23) à véhicule suivant la revendication 1 ou 2,
**caractérisé en ce que**
le composant (5) électrique est constitué sous la forme d'une diode.

4. Agencement (23) à véhicule suivant l'une des revendications mentionnées ci-dessus,
**caractérisé en ce que**
la deuxième partie (4) de la ligne de contact est disposée entre la première partie (3) de la ligne de contact et une lacune (10).

5. Agencement (23) à véhicule suivant l'une des revendications mentionnées ci-dessus,
**caractérisé en ce que**
la première distance (11) est si grande qu'un flux de courant est évité sur le composant (5) électrique et si petite qu'elle est plus petite que la longueur d'un appareil (14) de prise de courant du véhicule (13).

6. Agencement (23) à véhicule suivant l'une des revendications mentionnées ci-dessus,
**caractérisé en ce que**
la longueur de la première partie (3) de la ligne de contact est plus grande que la longueur de la deuxième partie (4) de la ligne de contact.

7. Agencement (23) à véhicule suivant l'une des revendications mentionnées ci-dessus,
**caractérisé en ce que**
les parties (3, 4) de la ligne de contact sont constituées sous la forme d'une barre de courant.
